# EUROPEAN PATENT APPLICATION

(11) **EP 4 772 977 A1**
(43) Date of publication of application: **08.07.2026**
(21) Application number: 24858609.1
(22) Date of filing: 28.08.2024
(51) Int. Cl.: G06F 3/0481

(54) **COMMENT INFORMATION PRESENTATION METHOD AND APPARATUS, COMMENT INFORMATION POSTING METHOD AND APPARATUS, AND COMPUTER DEVICE AND MEDIUM**

(30) Priority: 28.08.2023 CN 202311094408
(71) Applicant: Beijing Zitiao Network Technology Co., Ltd., Beijing 100190 (CN)
(72) Inventor: LIU, Fujia, Beijing 100028 (CN); ZHEN, Haixiang, Beijing 100028 (CN)
(74) Representative: Marks & Clerk LLP
(86) International application number: PCT/CN2024/115066
(87) International publication number: WO 2025/045075

(57) **Abstract**

Provided in the present disclosure are a comment information presentation method and apparatus, a comment information posting method and apparatus, and a computer device and a medium. The comment information presentation method comprises: in response to a comment viewing operation for target media content, presenting at least one piece of comment information; and at an associated position of at least one piece of first speech comment information, presenting text comment information that is obtained by performing text conversion on the first speech comment information, wherein the at least one piece of first speech comment information is comprised in the at least one piece of comment information.

## Description

The present application claims priority to Chinese Patent Application No. 202311094408.5, filed on August 28, 2023, which is incorporated herein by reference in its entirety as a part of the present application.

### TECHNICAL FIELD

Embodiments of the present disclosure relate to a comment information presentation method and apparatus, a comment information posting method and apparatus, a computer device, and a storage medium.

### BACKGROUND

With the development of internet technology, an increasing number of users can browse various multimedia content online and engage in interactions with the poster or other commenters of the multimedia content by commenting on the multimedia content or other comment information. The comment information can take multiple forms, such as text, pictures, or voice.

### SUMMARY

Embodiments of the present disclosure provide at least a comment information presentation method and apparatus, a comment information posting method and apparatus, a computer device, and a storage medium.

According to a first aspect, an embodiment of the present disclosure provides a comment information presentation method. The method includes:
presenting at least one piece of comment information in response to a comment viewing operation for target media content; and
presenting, at an associated position of at least one piece of first voice comment information, text comment information converted from the first voice comment information, where the at least one piece of first voice comment information is included in the at least one piece of comment information.

In a feasible implementation, presenting, at the associated position of the at least one piece of first voice comment information, the text comment information converted from the first voice comment information includes:
in response to that the at least one piece of first voice comment information includes a plurality of pieces of first voice comment information, presenting, at positions corresponding to the plurality of pieces of first voice comment information, text comment information converted from the plurality of pieces of first voice comment information, respectively.

In a feasible implementation, presenting, at the associated position of the at least one piece of first voice comment information, the text comment information converted from the first voice comment information includes:
in response to a trigger operation for a convert-to-text identifier of any piece of first voice comment information as presented, presenting, at a position corresponding to the piece of first voice comment information, text comment information converted from the piece of first voice comment information.

In a feasible implementation, the at least one piece of first voice comment information includes a plurality of pieces of first voice comment information; and
presenting the text comment information converted from the first voice comment information includes:
in response to a trigger operation for a convert-to-text identifier of any piece of first voice comment information as presented, respectively presenting text comment information converted from the piece of first voice comment information and text comment information converted from the first voice comment information following the piece of first voice comment information.

In a feasible implementation, respectively presenting text comment information converted from the piece of first voice comment information and text comment information converted from the first voice comment information following the piece of first voice comment information includes:
respectively presenting text comment information converted from the piece of first voice comment information and text comment information converted from a target number of pieces of first voice comment information following the piece of first voice comment information.

In a feasible implementation, the at least one piece of comment information is presented in a comment panel, and a value of the target number is determined based on an expanded size of the comment panel.

In a feasible implementation, the at least one piece of first voice comment information includes a plurality of pieces of first voice comment information; and
presenting the text comment information converted from the first voice comment information includes:
in response to a trigger operation for a convert-to-text identifier of any piece of first voice comment information as presented, respectively presenting text comment information converted from the piece of first voice comment information and text comment information converted from unconverted or unplayed first voice comment information.

In a feasible implementation, presenting the text comment information converted from the first voice comment information includes:
presenting text comment information converted from first voice comment information with an audio duration falling within a preset time range.

In a feasible implementation, the at least one piece of comment information is presented in a comment panel, and a value of the preset time range is determined based on an expanded size of the comment panel.

In a feasible implementation, the first voice comment information is obtained by voice input after triggering a voice control in a first trigger mode, and the first trigger mode is one of a plurality of trigger modes supported by the voice control.

In a feasible implementation, the first trigger mode includes a long-press triggering.

In a feasible implementation, the method further includes:
in response to the at least one piece of comment information including second voice comment information, presenting a music identifier at a position corresponding to the second voice comment information, where the music identifier is configured to indicate that the second voice comment information includes musical content.

In a feasible implementation, the second voice comment information is obtained by voice input after triggering a voice control in a second trigger mode, and the second trigger mode is one of a plurality of trigger modes supported by the voice control.

In a feasible implementation, the second trigger mode includes a click triggering.

According to a second aspect, an embodiment of the present disclosure provides a comment information posting method. The method includes:
in response to receiving first voice comment information input by a user for target media content, presenting text comment information converted from the first voice comment information in a comment input area; and
in response to a comment posting operation, posting the first voice comment information and/or the corresponding text comment information, such that the first voice comment information and/or the corresponding text comment information are presented in a comment area for the target media content.

In a feasible implementation, in response to receiving the first voice comment information input by the user for the target media content, presenting the text comment information converted from the first voice comment information in the comment input area includes:
in response to receiving the first voice comment information input by the user for the target media content, presenting a convert-to-text identifier at a position corresponding to the first voice comment information in the comment input area; and
in response to a trigger operation for the convert-to-text identifier, presenting the text comment information converted from the first voice comment information in the comment input area.

In a feasible implementation, in response to receiving the first voice comment information input by the user for the target media content, presenting the text comment information converted from the first voice comment information in the comment input area includes:
while receiving the first voice comment information input by the user for the target media content, presenting the text comment information converted from the first voice comment information received in real time in the comment input area.

In a feasible implementation, the first voice comment information input by the user for the target media content is received according to the following steps:
presenting a voice control in response to a comment trigger operation, where the voice control supports a plurality of trigger modes; and
receiving the first voice comment information input by the user for the target media content, in response to a first trigger operation on the voice control based on a first trigger mode, where the first trigger mode is one of a plurality of trigger modes supported by the voice control.

In a feasible implementation, the plurality of trigger modes include a long-press triggering and a click triggering.

According to a third aspect, an embodiment of the present disclosure further provides a comment information presentation apparatus. The apparatus includes:
a first presentation module configured to present at least one piece of comment information in response to a comment viewing operation for target media content; and
a second presentation module configured to present, at an associated position of at least one piece of first voice comment information, text comment information converted from the first voice comment information, where the at least one piece of first voice comment information is included in the at least one piece of comment information.

According to a fourth aspect, an embodiment of the present disclosure further provides a comment information posting apparatus. The apparatus includes:
a first presentation module configured to, in response to receiving first voice comment information input by a user for target media content, present text comment information converted from the first voice comment information in a comment input area; and
a second presentation module configured to, in response to a comment posting operation, post the first voice comment information and/or the corresponding text comment information, such that the first voice comment information and/or the corresponding text comment information are presented in a comment area for the target media content.

According to a fifth aspect, an embodiment of the present disclosure further provides a computer device. The computer device includes: a processor, a memory, and a bus, where the memory stores machine-readable instructions executable by the processor, the processor communicates with the memory through the bus when the computer device is running, and the machine-readable instructions, when executed by the processor, cause the steps of any one of the first aspect or the optional implementations in the first aspect to be performed, or cause the steps of any one of the second aspect or the optional implementations in the second aspect to be performed.

According to a sixth aspect, an embodiment of the present disclosure further provides a computer-readable storage medium including a computer program stored thereon, when executed by a processor, the computer program causes the steps of any one of the first aspect or the optional implementations in the first aspect to be performed, or causes the steps of any one of the second aspect or the optional implementations in the second aspect to be performed.

### BRIEF DESCRIPTION OF DRAWINGS

In order to more clearly illustrate the technical solutions in the embodiments of the present disclosure, the accompanying drawings for describing the embodiments will be briefly described below. The accompanying drawings herein, which are incorporated into and form a part of the description, show the embodiments in line with the present disclosure and are used in conjunction with the description to illustrate the technical solutions of the present disclosure. It should be understood that the following drawings only show some embodiments of the present disclosure, and therefore should not be considered as a limitation on the scope. For those of ordinary skill in the art, other related drawings can be derived from these drawings without creative efforts.
Fig. 1 is a flowchart of a comment information presentation method according to an embodiment of the present disclosure;
Fig. 2 is a schematic diagram of a comment information presentation page according to an embodiment of the present disclosure;
Fig. 3 is a schematic diagram of another comment information presentation page according to an embodiment of the present disclosure;
Fig. 4 is a schematic diagram of yet another comment information presentation page according to an embodiment of the present disclosure;
Fig. 5 is a schematic diagram of yet another comment information presentation page according to an embodiment of the present disclosure;
Fig. 6 is a schematic diagram of yet another comment information presentation page according to an embodiment of the present disclosure;
Fig. 7 is a schematic diagram of yet another comment information presentation page according to an embodiment of the present disclosure;
Fig. 8 is a flowchart of a comment information posting method according to an embodiment of the present disclosure;
Fig. 9 is a schematic diagram of a comment information posting page according to an embodiment of the present disclosure;
Fig. 10 is a schematic structural diagram of a comment information presentation apparatus according to an embodiment of the present disclosure;
Fig. 11 is a schematic structural diagram of a comment information posting apparatus according to an embodiment of the present disclosure; and
Fig. 12 is a schematic diagram of a computer device according to an embodiment of the present disclosure.

### DETAILED DESCRIPTION

In order to make the objectives, technical solutions, and advantages of embodiments of the present disclosure clearer, the technical solutions in the embodiments of the present disclosure will be clearly and completely described below with reference to the accompanying drawings in the embodiments of the present disclosure. Apparently, the described embodiments are merely some rather than all of the embodiments of the present disclosure. In general, the components of the embodiments of the present disclosure described and shown in the accompanying drawings herein can be arranged and designed in various configurations. Therefore, the following detailed description of the embodiments of the present disclosure, which are set forth in the accompanying drawings, is not intended to limit the scope of protection of the present disclosure, but merely represents selected embodiments of the present disclosure. All other embodiments obtained by those skilled in the art based on the embodiments of the present disclosure without creative efforts shall fall within the scope of protection of the present disclosure.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

Furthermore, it can be understood that the data involved in the technical solutions (including, but not limited to, the data itself and the access to or use of the data) shall comply with the requirements of corresponding laws, regulations, and relevant provisions.

According to research, with the development of internet technology, an increasing number of users can browse various multimedia content online and engage in interactions with the poster or other commenters of multimedia content by commenting on the multimedia content or other comment information. The comment information can take multiple forms, such as text, pictures, or voice. When a user is interested in a particular voice comment, they typically need to trigger the voice comment and can know the content of the voice comment only by playing audio corresponding to the voice comment.

It can be seen that because voice lacks the "what you see is what you get" advantage of text and pictures, users experience lower efficiency in filtering and viewing comment information when viewing voice comments.

In view of this, an embodiment of the present disclosure provides a comment information presentation method. The method includes: presenting at least one piece of comment information in response to a comment viewing operation for target media content; and presenting, at an associated position of at least one piece of first voice comment information, text comment information converted from the first voice comment information, where the at least one piece of first voice comment information is included in the at least one piece of comment information.

In embodiments of the present disclosure, presenting, at the associated position of the at least one piece of first voice comment information, the text comment information converted from the first voice comment information allows a user viewing comment information to directly view the text comment information corresponding to the first voice comment information. In this way, voice comments have a "what you see is what you get" display effect, reducing the time cost of filtering the comment information when viewing the comment information, and improving the user's efficiency in obtaining information from the voice comments.

In addition, an embodiment of the present disclosure further provides a comment information posting method. In the process of posting voice comment information, the corresponding text comment information is also automatically generated, so that the voice comment information and the corresponding text comment information are posted synchronously. This allows the user to directly view the text comment information corresponding to the voice comment information when viewing the comment information, thereby achieving the above-mentioned effects of reducing the time cost of filtering the comment information and improving the efficiency in obtaining information from the voice comments.

It should be noted that the thought process for the above-mentioned technical problem is the result of the inventors' practice and careful research. Therefore, the discovery process of the above-mentioned problem and the solutions presented in embodiments of the present disclosure to address the above-mentioned problem should all be contributions made by the inventors to the present disclosure during the course of the present disclosure.

It should be noted that similar reference signs and letters refer to similar items in the following accompanying drawings. Therefore, once a specific item is defined in one of the accompanying drawings, it does not need to be further defined and explained in subsequent accompanying drawings.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

To facilitate an understanding of the embodiments, a comment information presentation method disclosed in an embodiment of the present disclosure is first described in detail. An execution entity of the comment information presentation method provided in the embodiment of the present disclosure is generally a computer device with certain computing capabilities.

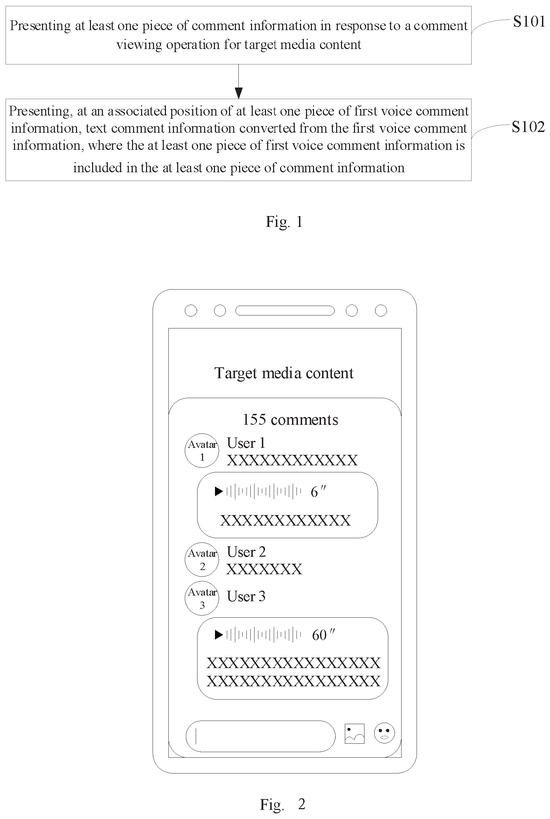

Referring to Fig. 1, which is a flowchart of a comment information presentation method according to an embodiment of the present disclosure. The method includes S101 and S102.

S101: Presenting at least one piece of comment information in response to a comment viewing operation for target media content.

S102: Presenting, at an associated position of at least one piece of first voice comment information, text comment information converted from the first voice comment information, where the at least one piece of first voice comment information is included in the at least one piece of comment information.

The comment information presentation method provided in the present embodiment of the present disclosure may be applied in a scenario of viewing comment information corresponding to the posted target media content. As an example, the target media content herein may include target media content in various posting scenarios, such as target media content posted to a social media platform, target media content in a web page, etc. The target media content may include media content in the form of videos, pictures, text, audio, etc. that is presented on the social media platform, the web page, and other occasions. At least one piece of comment information may be presented on a comment information presentation page in response to a comment viewing operation for the target media content.

In an implementation, the comment information corresponding to the target media content may be presented synchronously with the target media content. In this case, the comment viewing operation for the target media content may include a viewing trigger operation for the target media content, and S101 may include: presenting the target media content and the at least one piece of comment information corresponding to the target media content in response to the viewing trigger operation for the target media content.

In another implementation, the comment information corresponding to the target media content and the target media content may be presented asynchronously. When the target media content is presented, the comment information corresponding to the target media content may not be presented if the comment viewing operation for the target media content is not triggered. In this case, the comment viewing operation for the target media content may include a comment viewing operation for the presented target media content. The target media content may be presented before the step S101 is performed, and in response to the comment viewing operation for the target media content, the at least one piece of comment information is then presented.

In embodiments of the present disclosure, presenting, at the associated position of the at least one piece of first voice comment information, the text comment information converted from the first voice comment information allows a user to quickly view content of the comment information via the resulting text comment information without clicking on the voice comment information, thereby improving the efficiency in obtaining information.

In embodiments of the present disclosure, presenting, at the associated position of the at least one piece of first voice comment information, the text comment information converted from the first voice comment information may include a plurality of implementations. Several feasible implementations of S 102 are described in detail below.

In an implementation, presenting, at the associated position of the at least one piece of first voice comment information, the text comment information converted from the first voice comment information may include: in response to that the at least one piece of first voice comment information includes a plurality of pieces of first voice comment information, presenting, at positions corresponding to the plurality of pieces of first voice comment information, text comment information converted from the plurality of pieces of first voice comment information, respectively.

In the above-described implementation, each piece of first voice comment information of the plurality of pieces of first voice comment information may be automatically converted to text comment information, and the text comment information converted from each piece of first voice comment information is presented.

As an example, the first voice comment information may be presented in the form of a bubble, and the position of the text comment information corresponding to the first voice comment information may be within the bubble of the first voice comment information and below the first voice comment information, as shown in Fig. 2.

Automatically converting each piece of first voice comment information to obtain the text comment information allows the user to view the text comment information corresponding to each piece of first voice comment information without performing a convert-to-text operation on each piece of voice comment information. This can not only simplify the user's comment viewing operation, but also improve the efficiency in obtaining information to a certain extent.

Here, as shown in Fig. 2, because a comment posting user can also post a text comment synchronously with the voice comment information, the text comment directly edited and input by the user and the text information converted from the voice comment information may be presented in different manners. As an example, in terms of presentation form, the voice comment information and the corresponding resulting text information are presented in the same area, while the text comment synchronously posted by the user is presented in an adjacent area (here, above the voice comment information).

In an implementation, presenting, at the associated position of the at least one piece of first voice comment information, the text comment information converted from the first voice comment information may include: in response to a trigger operation for a convert-to-text identifier of any piece of first voice comment information as presented, presenting, at a position corresponding to the piece of first voice comment information, text comment information converted from the piece of first voice comment information.

In the above-described implementation, in response to that the user performing a trigger operation for the convert-to-text identifier of any piece of first voice comment information as presented, that is, the user manually converts the first voice comment information to text, the text comment information converted from the piece of first voice comment information may be presented.

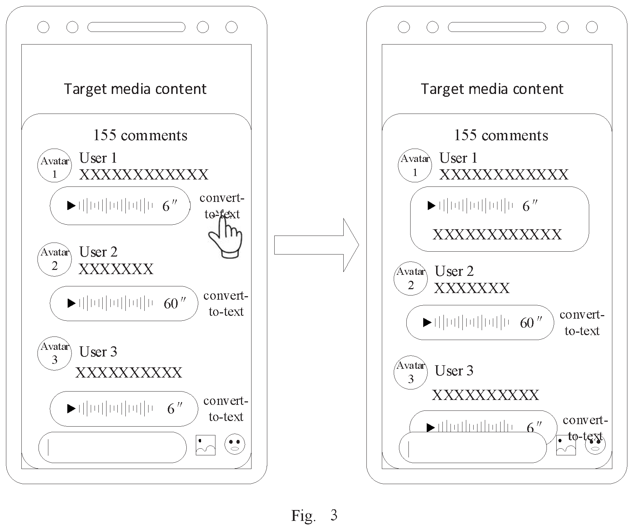

As an example, the convert-to-text identifier of the first voice comment information may be a "convert to text" prompt control. The "convert to text" prompt control may be located at the end of the first voice comment information, as shown in Fig. 3. In Fig. 3, in response to a click operation of the user on the "convert to text" prompt control for any piece of first voice comment information, text comment information converted from the piece of first voice comment information may be displayed at the end of the piece of first voice comment information.

Manually converting the first voice comment information to obtain the text comment information allows the user to perform a convert-to-text operation on each piece of voice comment information according to their needs.

In an implementation, the at least one piece of first voice comment information may include a plurality of pieces of first voice comment information. Presenting the text comment information converted from the first voice comment information may include: in response to a trigger operation for a convert-to-text identifier of any piece of first voice comment information as presented, respectively presenting text comment information converted from the piece of first voice comment information and text comment information converted from the first voice comment information following the piece of first voice comment information.

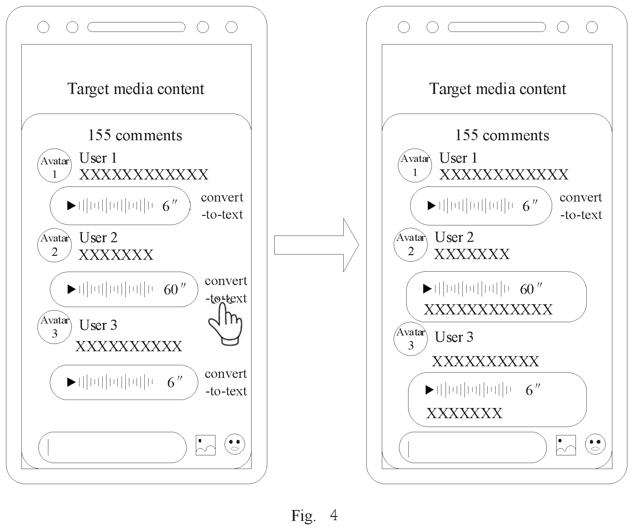

In the above-described implementation, after a trigger operation for the convert-to-text identifier of any piece of first voice comment information as presented is performed, the piece of first voice comment information and the first voice comment information following the piece of first voice comment information may be automatically converted to obtain the respective text comment information. As shown in Fig. 4, after the user triggers a convert-to-text identifier corresponding to the second piece of voice comment information, the second piece of voice comment information and the voice comment information following the second piece of voice comment information may be converted to obtain the respective text comment information.

With the above-described implementation, in response to that the user may have a need to convert the first voice comment information after any piece of first voice comment information to text, the user can view the text comment information corresponding to each piece of first voice comment information after any piece of first voice comment information without performing a convert-to-text operation on each piece of voice comment information separately. This can improve the efficiency in obtaining information to a certain extent.

Considering that an information presentation area in practice is of a limited size and that the text comment information being converted from the voice comment information will occupy a certain area, in a further implementation, presenting the respective text comment information converted from the piece of first voice comment information and the first voice comment information following the piece of first voice comment information may include: respectively presenting text comment information converted from the piece of first voice comment information and text comment information converted from a target number of pieces of first voice comment information following the piece of first voice comment information.

In the above-described implementation, as an example, the target number may be preset. For example, any piece of first voice comment information and only five pieces of first voice comment information following the piece of first voice comment information may be converted to obtain the respective text comment information. As another example, a value of the target number may also be determined based on an expanded size of a comment panel for presenting comment information. For example, a larger expanded size of the comment panel may lead to a larger target number, so that text comment information corresponding to more pieces of first voice comment information can be presented.

In embodiments of the present disclosure, in response to the comment viewing operation for the multimedia content, the text comment information converted from any piece of first voice comment information of at least one comment and the comment information converted from any piece of first voice comment information following the piece of first voice comment information are presented on the comment panel; and/or text comment information converted from first voice comment information of any duration is presented. The specific presentation process is not described in detail.

In an implementation, the at least one piece of first voice comment information includes a plurality of pieces of first voice comment information. Presenting the text comment information converted from the first voice comment information may include: in response to a trigger operation for a convert-to-text identifier of any piece of first voice comment information as presented, respectively presenting text comment information converted from the piece of first voice comment information and text comment information converted from unconverted or unplayed first voice comment information. It can be understood that unconverted or unplayed first voice comment information in a predetermined number range or position range may be set to be converted to text.

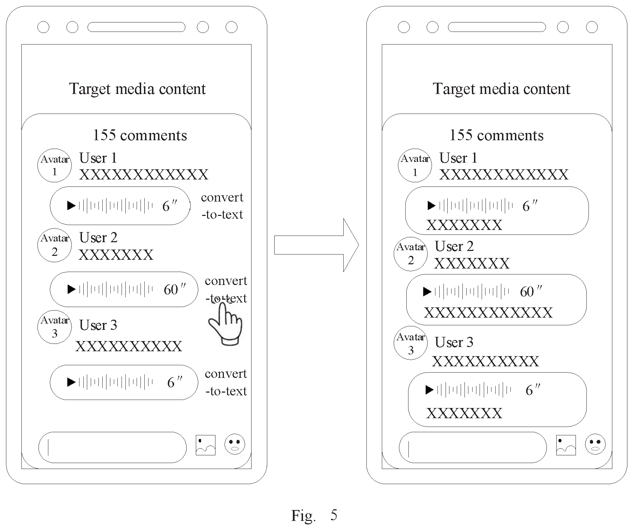

In the above-described implementation, the unconverted first voice comment information may include voice comment information that has not been converted to text comment information. As shown in Fig. 5, after the user triggers a convert-to-text identifier corresponding to the second piece of voice comment information, the first piece of voice comment information, the second piece of voice comment information, and the voice comment information following the second piece of voice comment information may be converted to obtain the respective text comment information.

In an implementation, presenting the text comment information converted from the first voice comment information may include: presenting text comment information converted from first voice comment information with an audio duration falling within a preset time range. As an example, the first voice comment information with an audio duration equal to or less than a target duration may be converted to text.

In the above-described implementation, as an example, the preset time range may be preset, such as within 10 seconds. As another example, a value of the preset time range may be determined based on an expanded size of the comment panel for presenting comment information. For example, a larger expanded size of the comment panel may lead to a larger preset time range, so that text comment information corresponding to first voice comment information falling within the larger preset time range can be presented.

If text comment information converted from first voice comment information with an audio duration exceeding the preset time range is presented, a larger display area will be occupied. Therefore, presenting the text comment information converted from the first voice comment information with an audio duration falling within the preset time range allows for a reduction in the occupied display area.

In embodiments of the present disclosure, the voice comment information may be input by using a trigger mode supported by a voice control. In an implementation, the first voice comment information may be obtained by voice input after triggering a voice control in a first trigger mode. The first trigger mode may be one of a plurality of trigger modes supported by the voice control. That is, only text comment information converted from the first voice comment information generated by using the first trigger mode is presented at an associated position of the first voice comment information.

Herein, the plurality of trigger modes supported by the voice control may include a long-press triggering, a click triggering, etc.

The long-press triggering may refer to that the voice control is triggered for longer than a preset duration. In the long-press trigger mode, voice input may start in response to the user pressing and holding the voice control; and the voice input may end in response to the user releasing the voice control.

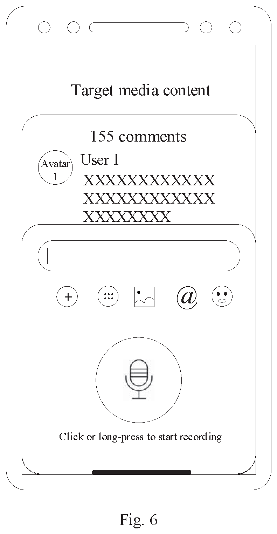

The click triggering may include a first click and a second click. It should be noted that the first click and the second click here are relative to a single voice input. The first click is a click performed for the first time at the start of the current voice input, and the second click is a click performed for the second time at the end of the current voice input. In the click trigger mode, voice input may start in response to the user clicking the voice control for the first time; and the voice input may end in response to the user clicking the voice control for the second time. As shown in Fig. 6, a voice control may be presented in a comment information input interface, where voice input is triggered by clicking or long-pressing.

In an implementation, for the first voice comment information, the first trigger mode may include the long-press triggering described above.

The voice comment information may include musical content or non-musical content. In the case that the voice comment information may include non-musical content, such as speech content, it typically does not require additional finger operations. Therefore, voice input may be usually performed by using the long-press trigger mode. In the case that the voice comment information may include musical content, such as sing-and-play content, it typically requires additional finger operations like playing instruments, holding a microphone, etc. Therefore, voice input may be usually performed by using the click trigger mode. During the voice input, the user can perform other finger operations without affecting the voice input process of the user.

In an implementation, in response to the at least one piece of comment information including second voice comment information, presenting a music identifier at a position corresponding to the second voice comment information, where the music identifier is configured to indicate that the second voice comment information includes musical content.

Considering that if the musical content is purely instrumental, no text comment information can be obtained through conversion; if it includes lyrics, the text comment information obtained through conversion is the lyrics. In this case, by presenting the music identifier, the user can be prompted that the second voice comment information includes musical content. The user can play the voice comment information directly, without needing to convert the second voice comment information to obtain the text comment information.

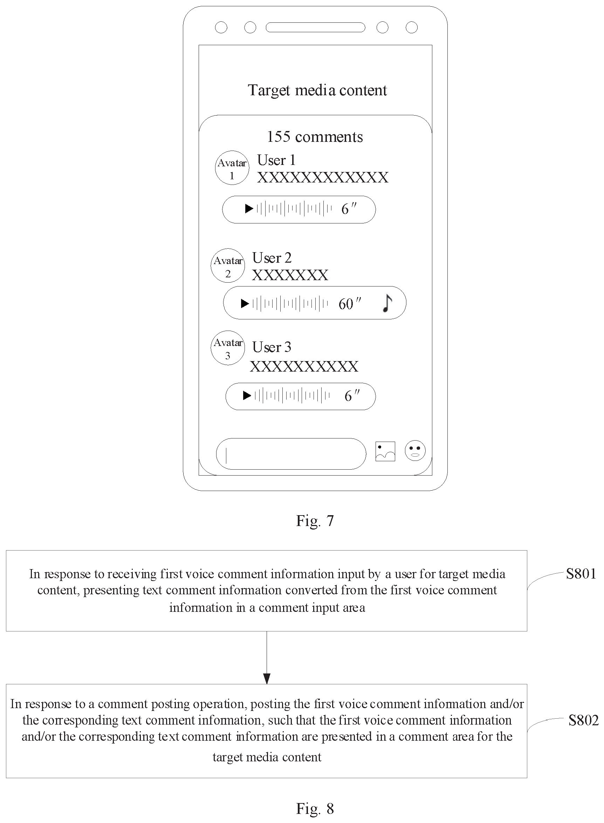

As shown in Fig. 7, the second piece of voice comment information may be musical content, and a music identifier may be presented at the end of the piece of voice comment information.

In an implementation, the second voice comment information may be obtained by voice input after triggering a voice control in a second trigger mode. The second trigger mode may be one of a plurality of trigger modes supported by the voice control.

In a further implementation, the second trigger mode may include the click triggering described above, which will not be described here again.

The user referred to in the embodiments of the present disclosure may be a user browsing comment information who views comments for multimedia content, and may also be a poster of comment information who posts comment information for multimedia content. The implementation of the process of viewing comment information for multimedia content by the user as a user browsing comment information is mainly described above. The implementation of the process of posting comment information for multimedia content by the user as a poster of comment information will be described below.

An embodiment of the present disclosure further provides a comment information posting method, which may be mainly applied in a scenario where a user posts voice comment information for multimedia content. Here, it should be noted that a posting side of comment information may also be a viewing side at the same time. In other words, in embodiments of the present disclosure, a same client can perform both the method process at the viewing side and the following method process at the posting side. Certainly, the client may perform the corresponding method process only as the viewing side or the posting side.

Referring to Fig. 8, which is a flowchart of a comment information posting method according to an embodiment of the present disclosure. The method includes S801 and S802.

S801: in response to receiving first voice comment information input by a user for target media content, presenting text comment information converted from the first voice comment information in a comment input area.

S802: in response to a comment posting operation, posting the first voice comment information and/or the corresponding text comment information, such that the first voice comment information and/or the corresponding text comment information are presented in a comment area for the target media content.

In the embodiments of the present disclosure, the first voice comment information input by the user for the target media content may be obtained by using a plurality of trigger modes supported by a voice control. As an example, the comment input area may include an input box. After the text comment information converted from the first voice comment information is presented, the user can also edit the text comment information, so that the first voice comment information and the edited text comment information can be posted.

In an implementation, the first voice comment information input by the user for the target media content may be received according to the following steps: presenting a voice control in response to a comment trigger operation, where the voice control supports a plurality of trigger modes; and receiving the first voice comment information input by the user for the target media content, in response to a first trigger operation on the voice control based on a first trigger mode, where the first trigger mode is one of a plurality of trigger modes supported by the voice control.

In an implementation, the plurality of trigger modes include a long-press triggering and a click triggering, etc. The long-press triggering may refer to that the voice control is triggered for longer than a preset duration. In the long-press trigger mode, voice input may start in response to the user pressing and holding the voice control; and the voice input may end in response to the user releasing the voice control. The click triggering may include a first click and a second click. It should be noted that the first click and the second click here are relative to a single voice input. The first click is a click performed for the first time at the start of the current voice input, and the second click is a click performed for the second time at the end of the current voice input. In the click trigger mode, voice input may start in response to the user clicking the voice control for the first time; and the voice input may end in response to the user clicking the voice control for the second time.

In the embodiments of the present disclosure, the text comment information converted from the first voice comment information may be presented in the comment input area after the user performs a convert-to-text operation.

In an implementation, in response to receiving the first voice comment information input by the user for the target media content, presenting the text comment information converted from the first voice comment information in the comment input area may include: in response to receiving the first voice comment information input by the user for the target media content, presenting a convert-to-text identifier at a position corresponding to the first voice comment information in the comment input area; and in response to a trigger operation for the convert-to-text identifier, presenting the text comment information converted from the first voice comment information in the comment input area.

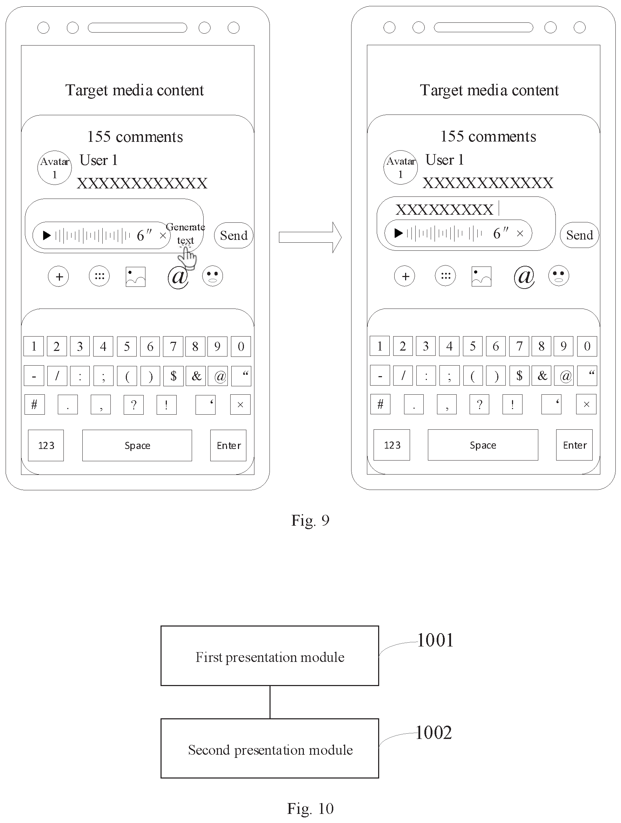

As an example, the convert-to-text identifier may be a "generate text" prompt control. The convert-to-text identifier may be presented at the end of the first voice comment information. As shown in Fig. 9, after the user inputs voice comment information, a "generate text" prompt control may be presented at the end of first voice comment information. After the "generate text" prompt control is triggered, text comment information converted from the first voice comment information may be presented within a bubble of the first voice comment information and above the first voice comment information. After the first voice comment information is presented, the user may further modify the resulting text comment information or delete the first voice comment information, retaining only the resulting text comment information, to choose to post the comment information according to their needs.

In the above-described implementation, the input first voice comment information can be manually converted to obtain the text comment information, which allows the user to choose to post the first voice comment information and the corresponding text comment information according to their needs.

In addition, because a comment posting user can also post a text comment synchronously with the voice comment information, the text comment directly edited and input by the user is different from the text information converted from the voice comment information. As can be seen from Figs. 3 to 5 and Fig. 9, in terms of presentation form, the voice comment information and the corresponding resulting text information are presented in the same area, while the text comment synchronously posted by the user is presented in an adjacent area (here, above the voice comment information).

In an implementation, in response to receiving the first voice comment information input by the user for the target media content, presenting the text comment information converted from the first voice comment information in the comment input area includes: while receiving the first voice comment information input by the user for the target media content, presenting the text comment information converted from the first voice comment information received in real time in the comment input area.

The received first voice comment information can be automatically converted to obtain the text comment information. Automatically converting each piece of first voice comment information to obtain the text comment information allows the user to present the first voice comment information and the text comment information corresponding to the first voice comment information without performing a convert-to-text operation on each piece of voice comment information. This can improve the user's efficiency in posting information to a certain extent.

An embodiment of the present disclosure may further provide a comment information posting method. The method may include: in response to receiving first voice comment information input by a user for target media content, presenting text comment information converted from the first voice comment information in a comment input area; and in response to a comment posting operation, presenting the text comment information corresponding to the posted first voice comment information.

Here, the user can post only the text comment information converted from the first voice comment information.

With this implementation, as an example, in the case of a failure to directly input text comment information, the user may automatically convert the input first voice comment information to text, and thus post only the text comment information.

For the step of, in response to receiving the first voice comment information input by the user, presenting the text comment information converted from the first voice comment information in the comment input area, reference may be made to the foregoing description, which will not be repeated herein.

Those skilled in the art can understand that, in the methods described above in the specific implementations, the order in which the steps are written does not imply a strict execution order, and does not constitute any limitation on the implementation process. The specific execution order of the steps should be determined by their functions and possible internal logic.

Based on the same inventive concept, an embodiment of the present disclosure further provides a comment information presentation apparatus corresponding to the comment information presentation method, and a comment information posting apparatus corresponding to the comment information posting method. Because the problem-solving principles of the apparatus in embodiments of the present disclosure are similar to those of the above-described method in embodiments of the present disclosure, for the implementation of the apparatus, reference may be made to the implementation of the method, and the repeated parts will not be described.

Referring to Fig. 10, which is a schematic structural diagram of a comment information presentation apparatus according to an embodiment of the present disclosure. The apparatus includes:
a first presentation module 1001 configured to present at least one piece of comment information in response to a comment viewing operation for target media content; and
a second presentation module 1002 configured to present, at an associated position of at least one piece of first voice comment information, text comment information converted from the first voice comment information, where the at least one piece of first voice comment information is included in the at least one piece of comment information.

In a feasible implementation, the second presentation module 1002 is specifically configured to: in response to that the at least one piece of first voice comment information includes a plurality of pieces of first voice comment information, present, at positions corresponding to the plurality of pieces of first voice comment information, text comment information converted from the plurality of pieces of first voice comment information, respectively.

In a feasible implementation, the second presentation module 1002 is specifically configured to: in response to a trigger operation for a convert-to-text identifier of any piece of first voice comment information as presented, present, at a position corresponding to the piece of first voice comment information, text comment information converted from the piece of first voice comment information.

In a feasible implementation, the at least one piece of first voice comment information includes a plurality of pieces of first voice comment information; and
the second presentation module 1002 is specifically configured to: in response to a trigger operation for a convert-to-text identifier of any piece of first voice comment information as presented, respectively present text comment information converted from the piece of first voice comment information and text comment information converted from the first voice comment information following the piece of first voice comment information.

In a feasible implementation, the second presentation module 1002 is specifically configured to: present respective text comment information converted from the piece of first voice comment information and text comment information converted from a target number of pieces of first voice comment information following the piece of first voice comment information.

In a feasible implementation, the at least one piece of comment information is presented in a comment panel, and a value of the target number is determined based on an expanded size of the comment panel.

In a feasible implementation, the at least one piece of first voice comment information includes a plurality of pieces of first voice comment information; and
the second presentation module 1002 is specifically configured to: in response to a trigger operation for a convert-to-text identifier of any piece of first voice comment information as presented, respectively present text comment information converted from the piece of first voice comment information and text comment information converted from unconverted or unplayed first voice comment information.

In a feasible implementation, the second presentation module 1002 is specifically configured to: present text comment information converted from first voice comment information with an audio duration falling within a preset time range.

In a feasible implementation, the at least one piece of comment information is presented in a comment panel, and a value of the preset time range is determined based on an expanded size of the comment panel.

In a feasible implementation, the first voice comment information is obtained by voice input after triggering a voice control in a first trigger mode, and the first trigger mode is one of a plurality of trigger modes supported by the voice control.

In a feasible implementation, the first trigger mode includes a long-press triggering.

In a feasible implementation, the apparatus further includes:
a third presentation module configured to: in response to the at least one piece of comment information including second voice comment information, present a music identifier at a position corresponding to the second voice comment information, where the music identifier is configured to indicate that the second voice comment information includes musical content.

In a feasible implementation, the second voice comment information is obtained by voice input after triggering a voice control in a second trigger mode, and the second trigger mode is one of a plurality of trigger modes supported by the voice control.

In a feasible implementation, the second trigger mode includes a click triggering.

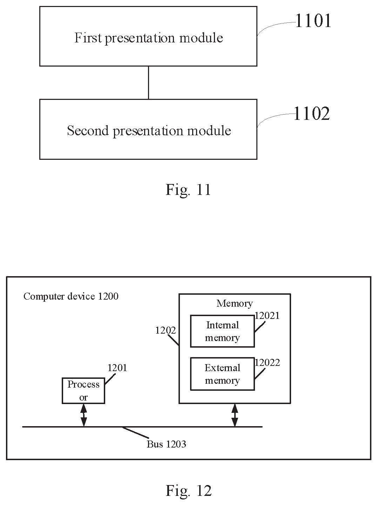

Referring to Fig. 11, which is a schematic structural diagram of a comment information posting apparatus according to an embodiment of the present disclosure. The apparatus includes:
a first presentation module 1101 configured to, in response to receiving first voice comment information input by a user for target media content, present text comment information converted from the first voice comment information in a comment input area; and
a second presentation module 1102 configured to, in response to a comment posting operation, post the first voice comment information and/or corresponding text comment information, such that the first voice comment information and/or the corresponding text comment information are presented in a comment area for the target media content.

In a feasible implementation, the first presentation module 1101 is specifically configured to:
in response to receiving the first voice comment information input by the user for the target media content, present a convert-to-text identifier at a position corresponding to the first voice comment information in the comment input area; and
in response to a trigger operation for the convert-to-text identifier, present the text comment information converted from the first voice comment information in the comment input area.

In a feasible implementation, the first presentation module 1101 is specifically configured to: while receiving the first voice comment information input by the user for the target media content, present the text comment information converted from the first voice comment information received in real time in the comment input area.

In a feasible implementation, the apparatus further includes: a receiving module. The receiving module is configured to receive the first voice comment information input by the user for the target media content, according to the following steps:
presenting a voice control in response to a comment trigger operation, where the voice control supports a plurality of trigger modes; and
receiving the first voice comment information input by the user for the target media content, in response to a first trigger operation on the voice control based on a first trigger mode, where the first trigger mode is one of a plurality of trigger modes supported by the voice control.

In a feasible implementation, the plurality of trigger modes include long-press triggering and click triggering.

For the description of the processing processes of various modules in the apparatus, and the interaction processes between the modules, reference may be made to the related description in the method embodiments, and details are not described herein again.

Based on the same technical concept, an embodiment of the present disclosure further provides a computer device. Referring to Fig. 12, which is a schematic structural diagram of a computer device 1200 according to an embodiment of the present disclosure. The computer device includes a processor 1201, a memory 1202, and a bus 1203. The memory 1202 is configured to store executable instructions, and includes an internal memory 12021 and an external memory 12022. The internal memory 12021 here is also referred to as a primary memory, which is configured to temporarily store operation data of the processor 1201, and data exchanged with the external memory 12022 such as a hard disk. The processor 1201 exchanges data with the external memory 12022 via the internal memory 12021. When the computer device 1200 is running, the processor 1201 communicates with the memory 1202 through the bus 1203, so that the processor 1201 executes the following instructions:
presenting at least one piece of comment information in response to a comment viewing operation for target media content; and
presenting, at an associated position of at least one piece of first voice comment information, text comment information converted from the first voice comment information, where the at least one piece of first voice comment information is included in the at least one piece of comment information.

Alternatively, when the computer device 1200 is running, the processor 1201 communicates with the memory 1202 through the bus 1203, so that the processor 1201 executes the following instructions:
in response to receiving first voice comment information input by a user for target media content, presenting text comment information converted from the first voice comment information in a comment input area; and
in response to a comment posting operation, posting the first voice comment information and/or the corresponding text comment information, such that the first voice comment information and/or the corresponding text comment information are presented in a comment area for the target media content.

An embodiment of the present disclosure further provides a computer-readable storage medium having a computer program stored thereon. The computer program, when executed by a processor, causes the steps of the comment information presentation method and the comment information posting method described in the foregoing method embodiments to be performed. The storage medium may be a volatile or non-volatile computer-readable storage medium.

An embodiment of the present disclosure further provides a computer program product carrying program code. Instructions included in the program code can be used to perform the steps of the comment information presentation method or the comment information posting method described in the foregoing method embodiments. For details, reference may be made to the foregoing method embodiments, and details are not described herein again.

The computer program product may be implemented in the form of hardware, software, or a combination thereof. In an optional embodiment, the computer program product is specifically embodied as a computer storage medium. In another optional embodiment, the computer program product is specifically embodied as a software product, such as a software development kit (SDK).

It can be clearly understood by those skilled in the art that, for convenience and brevity of description, for the specific operation processes of the apparatus described above, reference may be made to the corresponding processes in the foregoing method embodiments, and details are not described herein again. In the several embodiments provided in the present disclosure, it should be understood that the disclosed apparatus and method may be implemented in other manners. The apparatus embodiment described above is merely an example. For example, the unit division is merely logical function division and there may be other division during actual implementation. For another example, a plurality of units or components may be combined or integrated into another system, or some features may be omitted or not implemented. In addition, the displayed or discussed mutual couplings, direct couplings, or communication connections may be implemented through some communication interfaces. The indirect couplings or communication connections between the means or units may be implemented in electrical, mechanical, or other forms.

The units described as separate parts may or may not be physically separate, and parts displayed as units may or may not be physical units, and may be located at one position, or may be distributed on a plurality of network units. Some or all of the units may be selected according to actual needs to achieve the objectives of the solutions of the embodiments.

In addition, various functional units in the various embodiments of the present disclosure may be integrated into one processing unit, each of the units may exist alone physically, or two or more units may be integrated into one unit.

If the functions are implemented in the form of a software functional unit and sold or used as an independent product, the functions may be stored in a non-volatile computer-readable storage medium executable by a processor. Based on such an understanding, a part of the technical solutions of the present disclosure that contributes essentially or to the prior art, or a part of the technical solutions may be embodied in the form of a software product. The computer software product is stored in a storage medium and includes several instructions for instructing a computer device (which may be a personal computer, a server, or a network device) to perform all or some of the steps of the methods described in the embodiments of the present disclosure. Moreover, the foregoing storage medium includes a USB flash drive, a removable hard disk, a read-only memory (ROM), a random-access memory (RAM), a magnetic disk, an optical disc, or other various media that can store program code.

It should be finally noted that the embodiments described above are merely specific implementations of the present disclosure, and are used for illustrating rather than limiting the technical solutions of the present disclosure, and the scope of protection of the present disclosure is not limited thereto. Although the present disclosure has been described in detail with reference to the foregoing embodiments, those of ordinary skill in the art should understand that, within the technical scope disclosed in the present disclosure, any person skilled in the art could still modify the technical solutions described in the foregoing embodiments, or readily figure out any variations thereof, or make equivalent substitutions to some of the technical features thereof. However, these modifications, variations, or substitutions do not make the essence of the corresponding technical solutions depart from the spirit and scope of the technical solutions of the embodiments of the present disclosure, and shall fall within the scope of protection of the present disclosure. Therefore, the scope of protection of the present disclosure shall be subject to the scope of protection of the claims.

## Claims

1. A comment information presentation method, comprising:
presenting at least one piece of comment information in response to a comment viewing operation for target media content; and
presenting, at an associated position of at least one piece of first voice comment information, text comment information converted from the first voice comment information, wherein the at least one piece of first voice comment information is comprised in the at least one piece of comment information.

2. The method according to claim 1, wherein presenting, at the associated position of the at least one piece of first voice comment information, the text comment information converted from the first voice comment information comprises:
in response to that the at least one piece of first voice comment information comprises a plurality of pieces of first voice comment information, presenting, at positions corresponding to the plurality of pieces of first voice comment information, text comment information converted from the plurality of pieces of first voice comment information, respectively.

3. The method according to claim 1, wherein presenting, at the associated position of the at least one piece of first voice comment information, the text comment information converted from the first voice comment information comprises:
in response to a trigger operation for a convert-to-text identifier of any piece of first voice comment information as presented, presenting, at a position corresponding to the piece of first voice comment information, text comment information converted from the piece of first voice comment information.

4. The method according to any one of claims 1 to 3, wherein the at least one piece of first voice comment information comprises a plurality of pieces of first voice comment information; and
presenting the text comment information converted from the first voice comment information comprises:
in response to a trigger operation for a convert-to-text identifier of any piece of first voice comment information as presented, respectively presenting text comment information converted from the piece of first voice comment information and text comment information converted from first voice comment information following the piece of first voice comment information.

5. The method according to claim 4, wherein respectively presenting text comment information converted from the piece of first voice comment information and text comment information converted from first voice comment information following the piece of first voice comment information comprises:
respectively presenting text comment information converted from the piece of first voice comment information and text comment information converted from a target number of pieces of first voice comment information following the piece of first voice comment information.

6. The method according to claim 5, wherein the at least one piece of comment information is presented in a comment panel, and a value of the target number is determined based on an expanded size of the comment panel.

7. The method according to any one of claims 1 to 6, wherein the at least one piece of first voice comment information comprises a plurality of pieces of first voice comment information; and
presenting the text comment information converted from the first voice comment information comprises:
in response to a trigger operation for a convert-to-text identifier of any piece of first voice comment information as presented, respectively presenting text comment information converted from the piece of first voice comment information and text comment information converted from unconverted or unplayed first voice comment information.

8. The method according to any one of claims 1 to 7, wherein presenting the text comment information converted from the first voice comment information comprises:
presenting text comment information converted from first voice comment information with an audio duration falling within a preset time range.

9. The method according to claim 8, wherein the at least one piece of comment information is presented in a comment panel, and a value of the preset time range is determined based on an expanded size of the comment panel.

10. The method according to any one of claims 1 to 9, wherein the first voice comment information is obtained by voice input after triggering a voice control in a first trigger mode, and the first trigger mode is one of a plurality of trigger modes supported by the voice control.

11. The method according to claim 10, wherein the first trigger mode comprises a long-press triggering.

12. The method according to any one of claims 1 to 11, further comprising:
in response to the at least one piece of comment information comprising second voice comment information, presenting a music identifier at a position corresponding to the second voice comment information, wherein the music identifier is configured to indicate that the second voice comment information includes musical content.

13. The method according to claim 12, wherein the second voice comment information is obtained by voice input after triggering a voice control in a second trigger mode, and the second trigger mode is one of a plurality of trigger modes supported by the voice control.

14. The method according to claim 13, wherein the second trigger mode comprises a click triggering.

15. A comment information posting method, comprising:
in response to receiving first voice comment information input by a user for target media content, presenting text comment information converted from the first voice comment information in a comment input area; and
in response to a comment posting operation, posting the first voice comment information and/or corresponding text comment information, such that the first voice comment information and/or the corresponding text comment information are presented in a comment area for the target media content.

16. The method according to claim 15, wherein in response to receiving the first voice comment information input by the user for the target media content, presenting the text comment information converted from the first voice comment information in the comment input area comprises:
in response to receiving the first voice comment information input by the user for the target media content, presenting a convert-to-text identifier at a position corresponding to the first voice comment information in the comment input area; and
in response to a trigger operation for the convert-to-text identifier, presenting the text comment information converted from the first voice comment information in the comment input area.

17. The method according to claim 15, wherein in response to receiving the first voice comment information input by the user for the target media content, presenting the text comment information converted from the first voice comment information in the comment input area comprises:
while receiving the first voice comment information input by the user for the target media content, presenting the text comment information converted from the first voice comment information received in real time in the comment input area.

18. The method according to claim 15, wherein the first voice comment information input by the user for the target media content is received according to the following steps:
presenting a voice control in response to a comment trigger operation, wherein the voice control supports a plurality of trigger modes; and
receiving the first voice comment information input by the user for the target media content, in response to a first trigger operation on the voice control based on a first trigger mode, wherein the first trigger mode is one of the plurality of trigger modes supported by the voice control.

19. The method according to claim 18, wherein the plurality of trigger modes comprise a long-press triggering and a click triggering.

20. A comment information presentation apparatus, comprising:
a first presentation module, configured to present at least one piece of comment information in response to a comment viewing operation for target media content; and
a second presentation module, configured to present, at an associated position of at least one piece of first voice comment information, text comment information converted from the first voice comment information, wherein the at least one piece of first voice comment information is comprised in the at least one piece of comment information.

21. A comment information posting apparatus, comprising:
a first presentation module, configured to, in response to receiving first voice comment information input by a user for target media content, present text comment information converted from the first voice comment information in a comment input area; and
a second presentation module, configured to, in response to a comment posting operation, post the first voice comment information and/or corresponding text comment information, such that the first voice comment information and/or the corresponding text comment information are presented in a comment area for the target media content.

22. A computer device, comprising: a processor and a memory, wherein the memory stores machine-readable instructions executable by the processor, and the machine-readable instructions, when executed by the processor, cause the steps of the comment information presentation method according to any one of claims 1 to 14 to be performed, or cause the steps of the comment information posting method according to any one of claims 15 to 19 to be performed.

23. A computer-readable storage medium, comprising a computer program stored thereon, wherein when executed by a processor, the computer program causes the steps of the comment information presentation method according to any one of claims 1 to 14 to be performed, or causes the steps of the comment information posting method according to any one of claims 15 to 19 to be performed.
